(19)

Europäisches
Patentamt
European
Patent Office
Office européen
des brevets

(11) **EP 2 174 698 A1**

(12) **EUROPEAN PATENT APPLICATION**

(43) Date of publication:
**14.04.2010 Bulletin 2010/15**

(51) Int Cl.:
***B01D 46/24*** *(2006.01)*

(21) Application number: **09252378.6**

(22) Date of filing: **08.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **09.10.2008 JP 2008262988**<br>**29.09.2009 JP 2009223914**<br><br>(71) Applicant: **NGK INSULATORS, LTD.**<br>**Nagoya 467 (JP)** | (72) Inventors:<br>• **Yauyuki Futura**<br>**c/o Legal Affairs and Int...**<br>**Aichi-Ke, 467-8530 (JP)**<br>• **Hiramatsu, Takuya**<br>**c/o Legal Affairs and Int...**<br>**Aichi-Ke, 467-8530 (JP)**<br><br>(74) Representative: **Paget, Hugh Charles Edward et al**<br>**Mewburn Ellis LLP**<br>**33 Gutter Lane**<br>**GB-London EC2V 8AS (GB)** |

(54) **Honeycomb Structure**

(57)    There can be provided a honeycomb structure including modifying portions formed in a base material to modify pores which make no or little contribution to the flow of a DPF or each segment, whereby the increase of the heat capacity of the DPF or the segment and a temperature rise during the regeneration of the filter can be decreased, and the excessive increase of a pressure loss can be controlled without decreasing the permeation performance of a fluid. A honeycomb structure has a honeycomb shape and includes a plurality of cells as through channels of a fluid which are partitioned by porous partition walls between the inlet-side end surface of the structure as the inlet side of the fluid and the outlet-side end surface of the structure as the outlet side of the fluid. Partition walls 3 have a porous base material made of ceramic particles, and modifying portions 7 formed by impregnating all or a part of the base material with a slurry including particles having an average particle diameter smaller than the average pore diameter of the base material.

EP 2 174 698 A1

**Description**

BACKGROUND OF THE INVENTION

Field of the Invention

The present invention relates to a honeycomb structure which is suitably used as a dust collecting filter such as a diesel particulate filter or a catalyst carrier.

Description of the Related Art

A honeycomb structure has broadly been used as a collection filter for an exhaust gas such as a diesel particulate filter (DPF) for collecting and removing particulate matter (PM) such as soot included in an exhaust gas from a diesel engine or the like.

To use such a honeycomb structure (the filter) continuously for a long time, the filter needs to be periodically subjected to a regeneration treatment. That is, the PM deposited in the filter needs to be burnt and removed in order to decrease a pressure loss increased by the PM deposited in the filter with an elapse of time and to return the performance of the filter to an initial state. During the regeneration of this filter, the PM deposited in the filter burns in order from the inlet side of a fluid (an exhaust gas), and hence a temperature intensely rises in a portion closer to the outlet side of the fluid owing to heat generated before the outlet side and heat of the burning of the PM in the portion. In consequence, there are problems that the temperature rise in the filter easily becomes non-uniform and that a defect such as crack is generated by a heat stress.

To solve the problems, a method is suggested in which the honeycomb structure is constituted of a plurality of segments having a honeycomb shape, and the segments are integrally joined via a joining material made of an elastic material, whereby the heat stress acting on the honeycomb structure is scattered and alleviated (e.g., see Patent Document 1). In consequence, a resistance to thermal shock can be improved to a certain degree. However, in recent years, with the increase of the heat stress accompanying the enlargement of the filter, a sufficient effect cannot easily be obtained only by this method. Moreover, another honeycomb structure is known whose average pore diameter decreases from the inlet-side end surface of the structure to the outlet-side end surface thereof, whereby the PM is prevented from being mainly deposited near the outlet side of the structure to suppress the concentration of the burning heat during the regeneration of the filter (e.g., see Patent Document 2). However, when the average pore diameter of the structure is simply decreased, any sufficient effect cannot easily be obtained in the present situation. In addition, still another honeycomb structure is known whose porosity is decreased from the inlet-side end surface of the structure to the outlet-side end surface thereof, whereby the heat capacity of the outlet-side end surface of the structure exposed at a high temperature during the regeneration of the filter is increased to suppress the temperature rise during the regeneration (e.g., see Patent Document 3). However, the increase of the pressure loss due to the decrease of the porosity is caused.

As described above, any one of Patent Documents 1 to 3 cannot sufficiently solve the problems, and the problems have not been solved yet. Consequently, a further improvement is demanded.

[Patent Document 1] JP-A-2000-279729
[Patent Document 2] JP-A-1-145378
[Patent Document 3] WO2008-78799

SUMMARY OF THE INVENTION

The present invention has been developed in view of such a conventional situation, and an object thereof is to provide a honeycomb structure including modifying portions formed in a base material and capable of modifying pores of a DPF or segments which make no or little contribution to a flow, whereby it is possible to suppress the increase of a heat capacity in the DPF or the segments and the rise of a temperature during the regeneration of a filter, and it is also possible to control the excessive increase of a pressure loss without lowering the fluid permeation performance of the structure. Furthermore, the pores which make no or little contribution to the flow are selectively modified, and hence a catalyst with which the pores have to be originally coated is not required, whereby similar purification efficiency can be secured by a less amount of catalyst. Heretofore, soot which remains to be burnt has been deposited in the pores which make no or little contribution to the flow without being exposed to an air current at a high temperature during the regeneration. However, since the modifying portions are formed, almost all pores become communication pores, and the amount of the soot remaining on partition walls noticeably decreases, whereby regeneration efficiency can be increased. In addition, non-communication pores or narrowed portions are selectively modified, and hence only comparatively smooth portions need to be coated with the catalyst, thereby improving a catalyst coatability.

To achieve the above object, according to the present invention, a honeycomb structure is provided as follows.

[1] A honeycomb structure having a honeycomb shape and comprising a plurality of cells as through channels of a fluid which are partitioned by porous partition walls between the inlet-side end surface of the structure as the inlet side of the fluid and the outlet-side end surface of the structure as the outlet side of the fluid, wherein the partition walls have a porous base material made of ceramic particles, and modifying portions formed by impregnating all or a part of the base material with a slurry including particles having an average particle diameter smaller than the average pore diameter of the base material, followed by a heat treatment.

[2] The honeycomb structure according to [1], wherein the modifying portions modify non-communication pores formed in the base material.

[3] The honeycomb structure according to [1], wherein the modifying portions modify the pores in the partition walls having a partition wall permeation average flow speed which is less than 30% of that of the base material.

[4] The honeycomb structure according to any one of [1] to [3], whose porosity decreases as much as 8 to 20% after the modifying portions are provided as compared with before the modifying portions are provided.

[5] The honeycomb structure according to any one of [1] to [4], whose decrease ratio of the average pore diameter is less than 1% after the modifying portions are formed as compared with before the modifying portions are formed.

[6] The honeycomb structure according to any one of [1] to [5], wherein a permeation pressure loss generated during the permeation of the fluid through the partition walls is 15% or more smaller than in a honeycomb structure made of a material having an equal porosity and an equal average pore diameter.

[7] The honeycomb structure according to any one of [1] to [6], wherein a pressure loss due to deposited soot generated by the soot deposited on the partition walls during the permeation of the fluid through the partition walls is 5% or more smaller than in a honeycomb structure made of a material having an equal porosity and an equal average pore diameter.

[8] The honeycomb structure according to any one of [1] to [7], whose open area ratio of the inlet-side end surface thereof is larger than that of the outlet-side end surface thereof.

[9] The honeycomb structure according to any one of [1] to [8], wherein a catalyst component is loaded on the partition walls.

[10] The honeycomb structure according to [9], wherein the total loading amount of the catalyst after forming the modifying portions is decreased as compared with before forming the modifying portions.

In the honeycomb structure of the present invention, the modifying portions for modifying pores which make no or little contribution to a flow are formed in the base material of a DPF or the segments, whereby it is possible to produce an excellent effect that there can be provided the honeycomb structure capable of suppressing the increase of the heat capacity of the DPF or the segments and the rise of the temperature during the regeneration of the filter and capable of controlling even the excessive increase of a pressure loss without lowering the permeation performance of the fluid.

Furthermore, the pores through which the fluid does not easily pass and which make no or little contribution to the flow are selectively modified, and hence a catalyst which has heretofore coated the pores to make no or little contribution to the flow is not required, whereby a similar purification efficiency can be secured with a less amount of catalyst. Heretofore, soot which remains to be burnt has been deposited in the pores which make no or little contribution to the flow without being exposed to an air current at a high temperature during the regeneration. However, since the modifying portions are formed, the pores become communication pores which substantially contribute to the flow. Therefore, the amount of the soot remaining in the partition walls noticeably decreases, and the regeneration efficiency can be improved. In addition, non-communication pores or narrowed portions are selectively modified, and hence only comparatively smooth portions need to be coated with the catalyst, whereby a catalyst coatability improves.

BRIEF DESCRIPTION OF THE DRAWINGS

Fig. 1 is a schematic perspective view showing one example of an embodiment of a honeycomb structure according to the present invention;

Fig. 2 is a schematic plan view of the honeycomb structure of Fig. 1, partially showing open frontal ends of the structure on the inlet side of a fluid;

Fig. 3 is a schematic sectional view schematically showing the section of the honeycomb structure of Fig. 1;

Fig. 4 is a schematically enlarged sectional view schematically showing a part of the sections of partition walls in the honeycomb structure of Fig. 1;

Fig. 5 is an enlarged sectional view schematically showing a part of the sections of the partition walls before modifying portions of the honeycomb structure of Fig. 1 are formed;

Fig. 6 is an enlarged sectional view schematically showing a part of the sections of the partition walls impregnated with a slurry before the modifying portions of the honeycomb structure of Fig. 1 are formed;

Fig. 7 is a schematic diagram of the section of the honeycomb structure of Fig. 1 cut along a length direction (from the inlet-side end surface of the structure to the outlet-side end surface thereof);

Fig. 8 is a plan view of the honeycomb structure of Fig. 1, and is a schematic diagram partially showing the open frontal ends of the structure on the inlet side of the fluid and showing that the open frontal ends are provided with plugging portions;

Fig. 9 is a perspective view and a schematic diagram showing another example of the embodiment of the honeycomb structure according to the present invention;

Fig. 10 is a schematic perspective view schematically showing one example of honeycomb segments constituting the honeycomb structure according to the present invention;

Fig. 11 is a schematic perspective view schematically showing that the honeycomb segment of Fig. 10 is provided with plugging portions;

Fig. 12 is a plan view showing one example of the honeycomb structure according to the present invention, and is a schematic diagram partially showing one example of a plugged honeycomb structure having different open area ratios in the inlet-side end surface of the structure and the outlet-side end surface thereof;

Fig. 13 is a plan view showing one example of the honeycomb structure according to the present invention, and is a schematic diagram partially showing another example of the plugged honeycomb structure having different open area ratios in the inlet-side end surface of the structure and the outlet-side end surface thereof;;

Fig. 14 is a diagram schematically showing that a catalyst is loaded in the honeycomb structure according to the present invention, and schematically showing an enlarged partial partition wall section; and

Fig. 15 is a diagram schematically showing a relation between a heat capacity and a permeability. Description of Reference Numerals

1: honeycomb structure, 2: honeycomb segment, 3: partition wall, 5: cell, 5a: square cell, 5b octagonal cell, 6: ceramic particle, 7: modifying portion, 8: pore, 8a: pore which makes no or little contribution to flow, 8aa: pore which does not communicate, 8ab: narrowed portion, 9: plugging portion, 10: inlet-side end surface, 11: outlet-side end surface, 13: slurry, 15: catalyst, 20: inlet-side end surface, and 21: outlet-side end surface.

DESCRIPTION OF THE PREFERRED EMBODIMENT

Hereinafter, the present invention will be described with respect to a specific embodiment. The present invention is not limited to this embodiment when interpreted, and can variously be altered, modified or improved based on the knowledge of a person with ordinary skill.

[1] Constitution of Honeycomb Structure of the Present Invention:

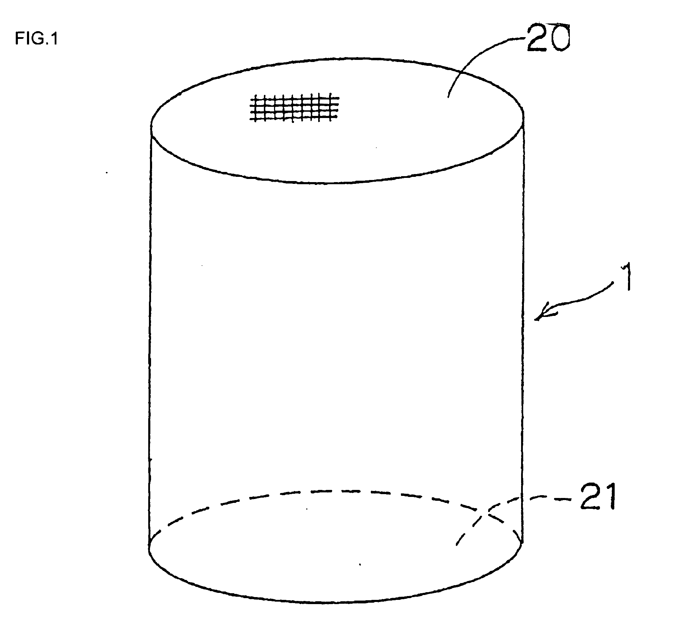

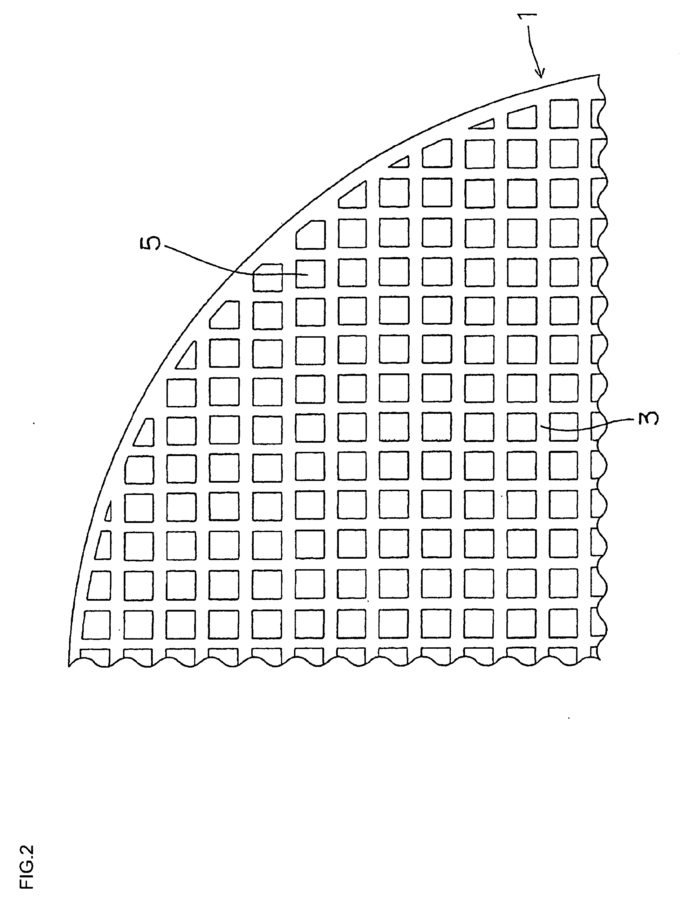

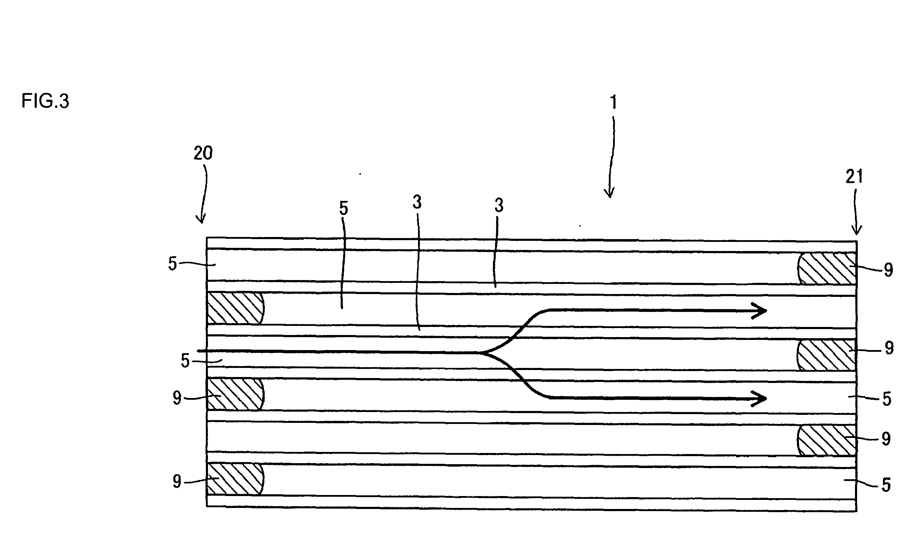

As shown in Figs. 1 to 4, a honeycomb structure of the present invention is a honeycomb structure 1 having a honeycomb shape and including a plurality of cells 5 as through channels of a fluid which are partitioned by porous partition walls 3 between an inlet-side end surface 20 of the structure as the inlet side of the fluid and an outlet-side end surface 21 of the structure as the outlet side of the fluid. The partition walls 3 have a porous base material made of ceramic particles 6, and modifying portions 7 formed by impregnating all or a part of the base material with a slurry including particles having an average particle diameter smaller than the average pore diameter of the base material, followed by a heat treatment in the honeycomb structure 1.

[1-1] Modifying Portion:

The modifying portions disposed in the honeycomb structure of the present embodiment are formed so as to modify the pores which are formed in the porous base material made of the ceramic particles to make no or little contribution to the flow. That is, when the base material is a porous material, the pores are formed in the partition walls, but all of the pores do not communicate, or do not contribute the flow along which an exhaust gas flows in or out. In other words, the porous base material is provided with a large number of pores which do not communicate or which make no or little contribution to the flow or a large number of narrowed portions. In a case where a large number of such pores which make no or little contribution to the flow are formed, there are many pores hardly having the flow along which the exhaust gas can flow in or out or having little influence on a pressure loss, and it can be considered that such pores are unnecessary for the purification treatment of the exhaust gas.

Moreover, the permeation performance of the fluid in the honeycomb structure can usually be regulated by a permeability, but this permeability is proportional to [the porosity] $\times$ [the average pore diameter]$^2$ of the pores through which the flow is present. Therefore, in a conventional honeycomb structure, a heat capacity cannot be increased while securing the permeability. Therefore, even in a case where the pores which make no contribution to the flow, the pores which make little contribution or the narrowed portions are closed with the modifying portions of a slurry, the permeation performance can be kept. In other words, portions which make no or little contribution to the flow are closed with the modifying portions so that any fluid does not flow into the portions, whereby the heat capacity can be increased while hardly changing the pressure loss as compared with before the modifying portions are formed. In consequence, an excessive temperature rise during the regeneration of the filter is easily controlled, and a regeneration efficiency is improved. That is, when the modifying portions are formed, the heat capacity can be increased while keeping the pressure loss of the partition walls. In addition, any soot or the like does not flow into the pores which make no or little contribution to the flow, and hence the regeneration efficiency can be improved.

Specifically, for example, the pores which are formed in all or a part of the porous base material made of ceramic particles to make no or little contribution to the flow are impregnated with the slurry including particles having an average particle diameter smaller than the average pore diameter of the base material, and then subjected to a heat treatment so that the slurry is attached to the pores to form the modifying portions. For example, when the honeycomb structure of the present embodiment is used in a DPF, the excessive temperature rise during the regeneration of the filter can be controlled, and the pressure loss of the partition walls can be kept.

Here, "the modifying portions" are portions formed by impregnating, with the slurry, the pores which are formed in the porous base material to make no or little contribution to the flow as described above and then performing the heat treatment to attach the slurry to the base material. The modifying portions are formed by a process of impregnating the honeycomb structure with a desired slurry, and causing air to flow into the partition walls by air blowing or the like to remove an unnecessary slurry from the partition walls and further from the honeycomb structure.

Moreover, "the average particle diameter" is a 50% particle diameter value measured by using LA-920 (the trade name) manufactured by Horiba, Ltd. as a measurement device in conformity to JIS R1629.

Moreover, the pores which make no or little contribution to the flow are pores which do not communicate from at least the surfaces of inflow cells to the surfaces of outflow cells, and further include regions having very low flow speed and flow rate, for example, such pores which do not communicate and the narrowed portions. Actually in a porous material, a large number of pores which do not communicate and narrowed portions are present. In a case where a large number of pores which do not communicate and narrowed portions are present in this manner, even when the porosity is increased, the permeation performance does not improve, and the pressure loss does not decrease on occasion. For example, the permeation performance of the fluid can be regulated by the permeability, but the permeability is usually proportional to the porosity $\times$ (the average pore diameter)$^2$ of the pores through which the flow is present. Therefore, a heat capacity cannot be increased while securing the permeability and a collection efficiency. Therefore, in a case where the above-mentioned pores which do not communicate or the narrowed portions are closed with the modifying portions of the slurry, the heat capacity is increased while keeping the permeation performance. In other words, contraflow gaps are filled with coating walls such as the modifying portions so that any fluid does not flow into the portions which do not communicate, whereby the fluid is prevented from flowing into the pores which do not communicate or the narrowed portions, and is caused to flow only into the communicating pores.

"The permeability" mentioned in the present description is a physical property value calculated by the following equation (1), and is an index value indicating a passing resistance when a predetermined gas passes through subjects (the partition walls).

[Equation 1]

$$ C = \frac{8FTV}{\pi D^2 (P^2 - 13.839^2)/13.839 \times 68947.6} \times 10^{-4} \cdots (1) $$

in which C is a permeability (m$^2$), F is the flow rate of a gas (cm$^3$/s), T is the thickness (cm) of a sample, V is the viscosity (dynes•sec/cm$^2$) of the gas, D is the diameter (cm) of the sample, and P is the pressure (PSI) of the gas, respectively. Moreover, in the equation (1), numeric values are 13.839 (PSI) = 1 (atm) and 68947.6 (dynes•sec/cm$^2$) = 1 (PSI).

Furthermore, the modifying portions are formed in all or a part of the base material. When the modifying portions are formed in the whole base material, in the whole honeycomb structure, the heat capacity can preferably be increased to suppress the temperature rise during the regeneration while keeping the pressure loss of the partition walls, whereby the regeneration efficiency can be improved. Moreover, when the modifying portions are formed in a part of the base material, the heat capacity can preferably locally (partially) be increased to suppress the temperature rise during the regeneration while keeping the pressure loss of the partition walls, whereby the regeneration efficiency can be improved. Above all, in a case where the honeycomb structure is used in the DPF, even when the temperature rises in one honeycomb structure, a portion having a high temperature and a portion having a low temperature are locally generated on occasion. There is a problem that such a non-uniform temperature difference easily generates a heat stress. To solve such a problem, the modifying portions can appropriately be formed in all or a part of the base material, whereby the temperature rise during the regeneration can locally or entirely be suppressed.

Preferably, the modifying portions modify non-communication pores formed in the base material. The modifying portions can modify pores which are formed in the base material to make no contribution to the flow and which do not communicate from the surfaces of inflow cells to the surfaces of outflow cells, to securely suppress the temperature rise during the regeneration. Here, "the non-communication pores" are the pores which are formed in the base material to make no contribution to the flow and which do not communicate from the surfaces of the inflow cells to the surfaces of the outflow cells.

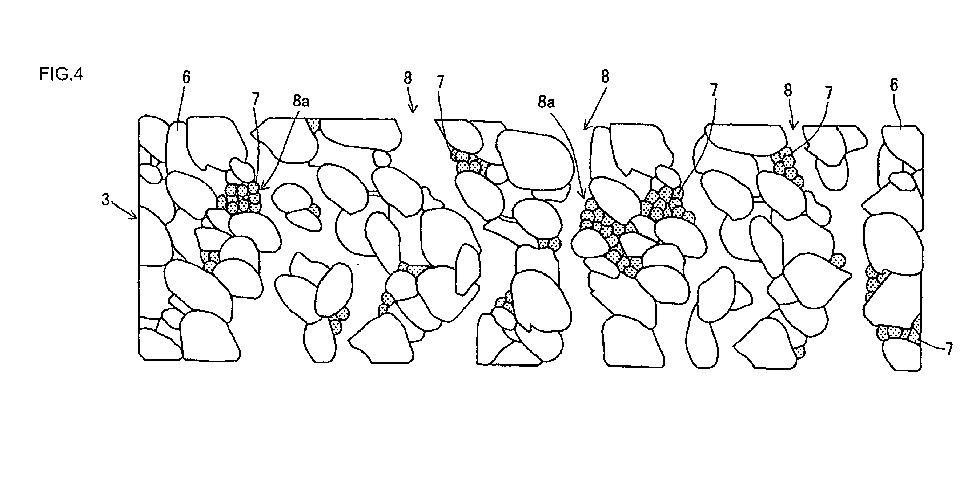

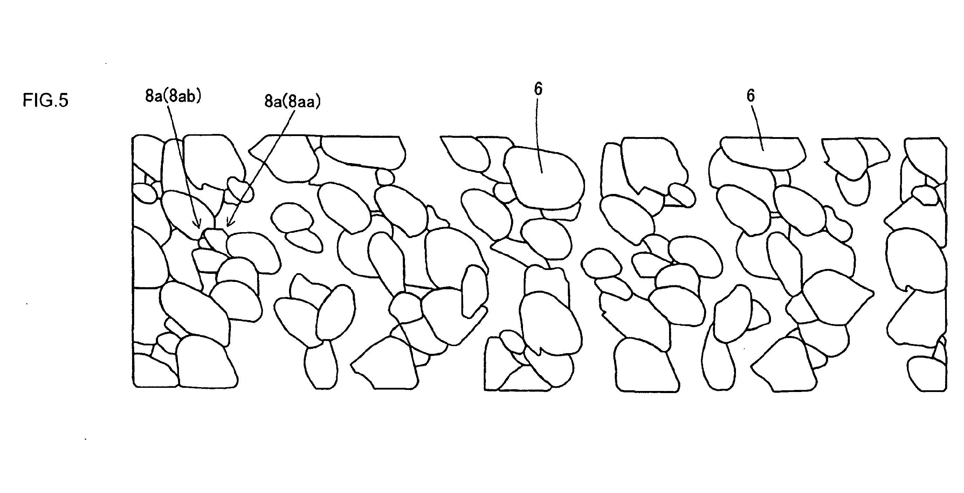

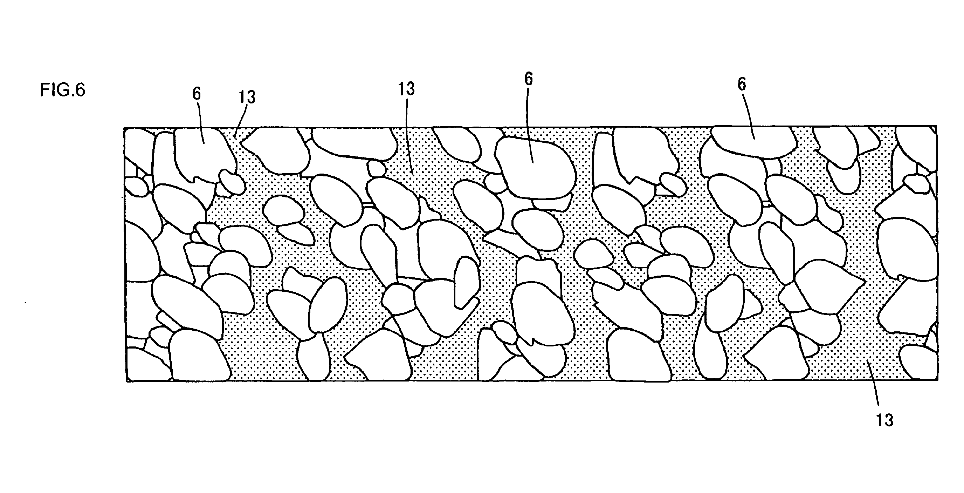

The modifying portions will be described with reference to Figs. 4 to 6. As shown in Fig. 5, in the honeycomb structure actually made of a porous material, pores 8a (the non-communication pores 8a) which make no or little contribution to the flow, for example, the pores which do not communicate and the narrowed portions are present. Therefore, in the present embodiment, as shown in, for example, Fig. 6, the pores which are formed in all or a part of the porous base material made of the ceramic particles 6 to make no or little contribution to the flow are impregnated with a slurry 13 including particles having an average particle diameter smaller than the average pore diameter of the base material, and then an unnecessary slurry is removed by air blowing, whereby the heat treatment is performed to attach the slurry and form the modifying portions 7 as shown in Fig. 4.

It is to be noted that Fig. 4 is an enlarged sectional view schematically showing a part of the partition walls in a state in which the modifying portions are formed. Fig. 5 is an enlarged sectional view schematically showing a part of the partition walls before the modifying portions are formed. Fig. 6 schematically shows that the partition wall of Fig. 5 is impregnated with the slurry.

Moreover, modifying portions modify the pores in the partition walls having a partition wall permeation average flow speed which is less than 30% of that of the base material, which is another preferable configuration. The modifying portions modify not only the pores (e.g., the non-communication pores) which are formed in the base material to make no contribution to the flow and which do not communicate from the surfaces of the inflow cells to the surfaces of the outflow cells but also regions (e.g., narrowed portions) which are pores to make little contribution to the flow and which have a very low flow speed and a very small flow rate, whereby the temperature rise during the regeneration can securely be suppressed.

Here, "the partition wall permeation average flow speed (m/s)" is a value obtained by dividing the volumetric flow rate ($m^3$/s) of the gas flowing into the honeycomb structure by the sum ($m^2$) of filter areas in the honeycomb structure. A method of confirming that the flow speed in each modifying portion is less than 30% of the partition wall permeation average flow speed (m/s) may be performed as follows. First, fluid analysis is performed by using CT data of an unmodified mother material, and a fluid speed distribution in the partition walls is confirmed, to identify the modifying portions and to determine an air pressure of air blowing for flying an unnecessary slurry. It can be judged whether or not desired modifying portions are formed, by acquiring the CT data again after providing the modifying portions, and confirming whether or not the modifying portions are formed as targeted.

More preferably, the modifying portions modify pores which are formed near the outlet-side end surface of the structure to make no or little contribution to the flow. In a case where the pores which are formed near the outlet-side end surface of the structure to make no or little contribution to the flow are modified in this manner, the heat capacity and a thermal conductivity can be increased, the temperature rise can appropriately be suppressed, and a resistance to thermal shock can be improved.

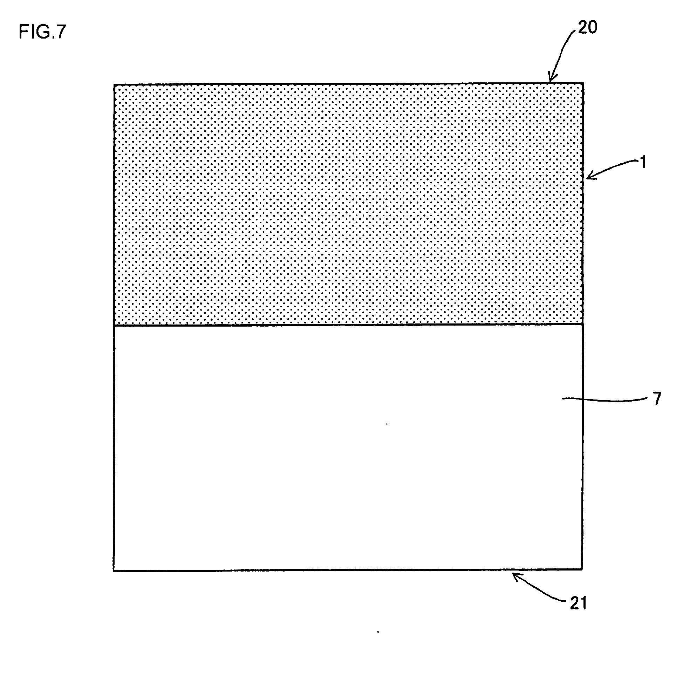

Specifically, as shown in, for example, Fig. 7, the modifying portion 7 modifies the pores which are formed near the outlet-side end surface 21 to make no or little contribution to the flow.

Furthermore, in one of preferable configurations, the modifying portions are formed in a range of a length of 1/10 to 1/2 of the whole length of the honeycomb structure along the axial direction of the cells from the outlet-side end surface of the honeycomb structure. The configuration is preferable from a viewpoint of effectively suppressing the excessive temperature rise near the outlet-side end surface of the structure during the regeneration of the filter, because the heat capacity and the thermal conductivity can be increased, the temperature rise can appropriately be suppressed, and the resistance to the thermal shock can be improved. On the other hand, when the forming region of the modifying portions is less than 1/10 of the whole length of the honeycomb structure, from a viewpoint of effectively suppressing the excessive temperature rise near the outlet-side end surface of the structure during the regeneration of the filter, the heat capacity and the thermal conductivity unfavorably are not easily secured. When the region exceeds 1/2 of the whole length of the honeycomb structure, a temperature distribution unfavorably does not become uniform during the regeneration.

Moreover, in the honeycomb structure of the present embodiment, a modifying portion forming region in the diametric direction of the honeycomb structure is formed in a region excluding a portion of 1/10 to 3/5 of the radius of the honeycomb structure from the outer periphery of the honeycomb structure to the center thereof in one of the preferable configurations. When the modifying portions are formed in this manner, the effect of suppressing the local temperature rise during the regeneration of the filter can be obtained, and a uniform temperature distribution during the regeneration can be obtained. It is to be noted that in a case where a region in which any modifying portion is not formed in the diametric direction of the honeycomb structure is a region which is less than 1/10 of the radius of the honeycomb structure from the outer periphery of the honeycomb structure to the center thereof, the temperature distribution during the regeneration does not become uniform. When the region exceeds 3/5 of the radius of the honeycomb structure from the outer periphery of the honeycomb structure to the center thereof, the effect of suppressing the temperature rise near the outlet side of the fluid during the regeneration of the filter cannot easily be obtained.

Furthermore, the porosity of the honeycomb structure preferably decreases as much as 8 to 20% after the modifying portions are provided as compared with before the modifying portions are provided. When the honeycomb structure having a desired porosity is provided with the modifying portions, the whole honeycomb structure can increase the heat capacity while keeping the pressure loss of the partition walls. On the other hand, depending on the amount of the pores which make no or little contribution to the flow, when the decrease ratio of the porosity is less than 8%, a maximum temperature lowering amount unfavorably does not reach about 70°C. The maximum temperature lowering amount is preferably large. However, when the maximum temperature lowering amount is 70°C or more, a trade-off relation between the amount and the pressure loss becomes satisfactory. Therefore, more preferably, the porosity of the honeycomb structure decreases as much as 8% or more after the modifying portions are provided as compared with before the modifying portions are provided. On the other hand, when the porosity decreases in excess of 20%, the increase ratio of the permeation pressure loss in the partition walls becomes 15% or more. When the honeycomb structure provided with the modifying portions is formed, the deterioration of the structure due to the pressure loss is unfavorably clearly confirmed. In other words, in the present embodiment, the pressure loss is preferably suppressed as much as possible to suppress the temperature rise and to improve a heat resistance. In addition, the pressure loss of an integrally formed structure is preferably suppressed within fluctuations. Furthermore, when the porosity is decreased as much as more than 20%, the amount of the modifying portions (a modifying amount) increases, and cost burdens are unfavorably disadvantageous. Therefore, with respect to a forming cost, the modifying by use of the base material having a porosity which is predetermined amount higher than a target porosity is preferably inexpensive. In consequence, the porosity of the honeycomb structure preferably decreases as much as 20% or less after the modifying portions are provided as compared with before the modifying portions are provided.

Here, "before the modifying portions are provided" is a state (of the honeycomb structure) before the partition walls of the base material are provided with the modifying portions. Moreover, "after the modifying portions are provided" is a state after the partition walls of the base material are provided with the modifying portions, that is, a state after impregnating the partition walls of the base material with a desired slurry and causing air to flow into the partition walls by air blowing or the like to remove an unnecessary slurry and form the modifying portions.

It is to be noted that "the porosity" regulated in the present invention is measured by Archimedes process using, as a test piece, a flat plate having a partition wall thickness and cut from the portion of the base material which is not provided with any modifying portion or the portion provided with the modifying portion, and "the average pore diameter" is measured by mercury porosimetry using a test piece having a predetermined shape (5x15 mm) and cut from the portion of the base material which is not provided with any modifying portion or the portion provided with the modifying portion.

The porosity of the base material in the honeycomb structure of the present embodiment is 30 to 80%, preferably 45 to 80%. When the porosity of the base material is less than 30%, the pressure loss of the base material itself is excessively large. When the porosity exceeds 80%, the maximum temperature during the regeneration of the filter excessively rises, which causes a practical problem. Moreover, the average pore diameter of the base material is 5 to 40 $\mu$m, preferably 5 to 20 $\mu$m. When the average pore diameter of the base material is less than 5 $\mu$m, the pressure loss of the base material itself is excessively large. When the average pore diameter exceeds 40 $\mu$m, the PM collecting function of the filter excessively lowers, which causes a practical problem.

Moreover, in the honeycomb structure of the present embodiment, the length, porosity and average pore diameter of a modifying portion forming region may be equal in the whole honeycomb structure in the diametric direction thereof, and one or more of the length, porosity and average pore diameter of the modifying portion may change in the above limit region continuously or gradually from the center of the honeycomb structure to the outer periphery thereof.

Furthermore, the decrease ratio of the average pore diameter of the honeycomb structure is preferably 10% or less, more preferably 5% or less, most preferably less than 1% after the modifying portions are formed as compared with before the modifying portions are formed. Thus, the pores which make no or little contribution to the flow are provided with the modifying portions at a desired ratio, and the decrease ratio of the average pore diameter is hardly varied while decreasing the porosity of the whole honeycomb structure, whereby densification can be achieved while sufficiently securing communication pores through which the fluid substantially flows and securing the collection efficiency. On the other hand, when the decrease ratio of the average pore diameter of the honeycomb structure decreases in excess of 10%, the partition wall pressure loss might unfavorably deteriorate. When the change ratio of the average pore diameter of the honeycomb structure is set to 10% or less in this manner, the collection efficiency can be improved while keeping the partition wall pressure loss, and the effect of the present invention can further be produced.

Here, the change ratio of the average pore diameter of the honeycomb structure is a numeric value obtained by dividing the average pore diameter after forming the modifying portions in the partition walls of the base material, that is, the average pore diameter after impregnating the partition walls of the base material with a desired slurry and causing the air to flow into the partition walls by the air blowing or the like to remove the unnecessary slurry and to form the modifying portions, by the average pore diameter of the honeycomb structure before the modifying portions are formed in the partition walls of the base material.

Moreover, the permeation pressure loss generated during the permeation of the fluid through the partition walls is preferably 15% or more smaller than that of the honeycomb structure made of the material having the equal porosity and average pore diameter. According to such a constitution, a low pressure loss can preferably be realized with the equal porosity and average pore diameter. Here, "made of the material having the equal porosity and average pore diameter" indicates an unmodified honeycomb structure having the porosity and average pore diameter equal to those of the honeycomb structure provided with the modifying portions.

Furthermore, the pressure loss due to the deposited soot generated by the soot adhering to the partition walls during the permeation of the fluid through the partition walls is preferably 5% or more smaller than the pressure loss of the honeycomb structure made of the material having the equal porosity and average pore diameter. According to such a constitution, the low pressure loss can preferably be realized with the equal heat capacity. Here, "made of the material having the equal porosity and average pore diameter" indicates the unmodified honeycomb structure having the porosity and average pore diameter equal to those of the honeycomb structure provided with the modifying portions.

Moreover, the decrease of the permeability of the honeycomb structure after forming the modifying portions preferably has a relation represented by the following formula with respect to the structure before forming the modifying portions.

$$[\text{The decrease of the permeability}] < 0.03 \times [\text{the porosity}] \times [\text{the average pore diameter}]^2 \times (1-(1-[\text{the porosity decrease ratio}])^{0.5} \times (1-[\text{the average pore diameter decrease}]).$$

Thus, it can be considered that in a case where the change of the porosity or the average pore diameter satisfies the above range, the only pores that make no or little contribution to the flow are modified though the change of the permeability is small. Therefore, the soot deposited in the pores which make no or little contribution to the flow and remaining to be burnt during the regeneration is not deposited any more, and hence the regeneration efficiency can be improved. Furthermore, in a case where this honeycomb structure is used as a catalyst loading filter in which a catalyst is loaded, a catalyst coat amount is preferably small.

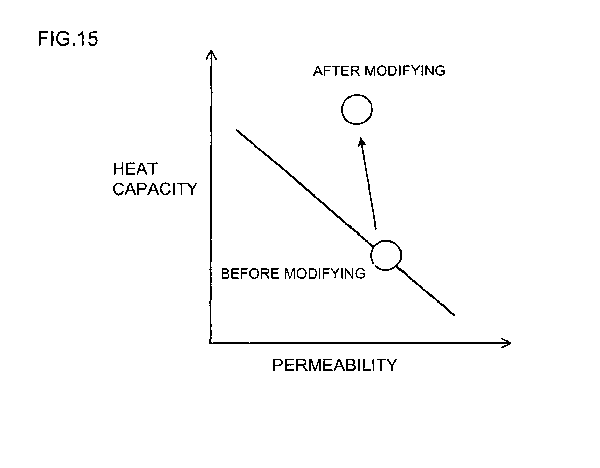

Specifically, as shown in a graph of Fig. 15, the permeability is proportional to [the porosity] $\times$ [the average pore diameter]$^2$ of the pores through which the flow is present. Therefore, to improve the heat capacity while securing the permeability, the decrease of the permeability of the honeycomb structure after forming the modifying portions preferably has the relation represented by the above formula with respect to the structure before forming the modifying portions. It is to be noted that Fig. 15 shows the heat capacity along the ordinate and the permeability along the abscissa.

Moreover, the modifying portions are made of the modifying slurry including modifying particles, and the average diameter of the modifying particles is preferably 20% or less of the average pore diameter. By use of the modifying particles having such desired diameters, the particles securely enter the pores which make no or little contribution to the flow, and the modifying portions can be formed, whereby the heat capacity can be improved while keeping the partition wall pressure loss. On the other hand, in a case where the modifying particles exceeding the above conditions are used, the particles do not sufficiently enter the pores which make no or little contribution to the flow, and the heat capacity unfavorably cannot be improved.

Furthermore, the modifying portions are made of the modifying slurry including the modifying particles, and the modifying particles have diameters of preferably 2 to 10% of the average pore diameter. When the diameters are less than 2%, the particles do not easily remain in the pores. When the diameters exceed 10%, the particles do not easily enter the pores. That is, when the modifying particles have the above desired diameters, the modifying portions are easily formed with a desired state in a desired region, and the whole effect of the present application can preferably be produced.

Moreover, the mass concentration of water included in the modifying slurry is preferably 70 mass% or more. When the mass concentration of the water included in the modifying slurry is set to a desired value in this manner, the slurry includes a sufficient solid content, and hence the pores which make no or little contribution to the flow can be modified. On the other hand, when the modifying slurry does not satisfy the above conditions, the solid content of the slurry becomes excessively large, and neck portions of the communication pores might unfavorably be closed in addition to the pores which make no or little contribution to the flow. It is to be noted that the neck portions are regions in which the diameters of the distributed pores formed in the partition walls decrease.

Furthermore, the honeycomb structure preferably include plugging portions which plug open frontal areas of predetermined cells in the inlet-side end surface of the structure and which plug open frontal areas of the remaining cells in the outlet-side end surface of the structure.

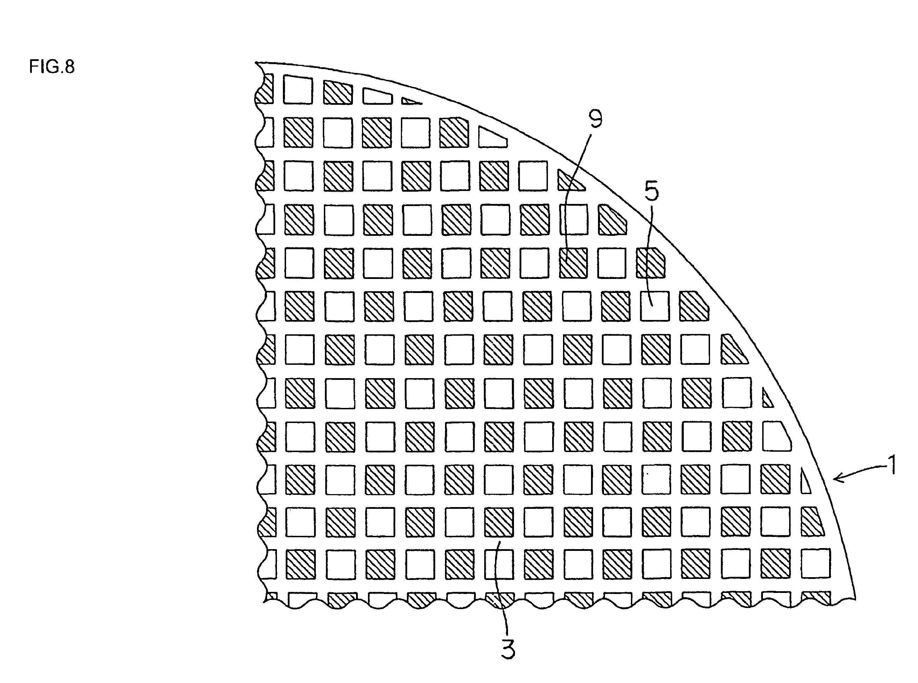

Specifically, as shown in Fig. 8, in a honeycomb structure including an inlet-side end surface 20 as the inlet side of a fluid and an outlet-side end surface 21 as the outlet side thereof and including a plurality of cells (through pores) 5 as through channels of the fluid partitioned by porous partition walls 3 between the two end surfaces of the structure, there may be provided the plugging portions which plug the open frontal areas of the predetermined cells in the inlet-side end surface of the structure and which plug the open frontal areas of the remaining cells in the outlet-side end surface of the structure. Thus, the plugging portions are formed so that the one end surface of the structure is plugged with plugging portions 9 so as to obtain a checkered pattern and so that the other end surface of the structure is plugged with the plugging portions so as to obtain a complementary checkered pattern, whereby the structure can preferably be used as a filter such as the DPF. Furthermore, the plugging portions may be formed so as to plug the open frontal areas of the adjacent cells in the opposite end surfaces of the structure.

In a case where the plugging portions are formed in this manner, and a fluid including a PM such as soot is passed from the one end surface (the inlet-side end surface) of the honeycomb structure provided with the plugging portions, the fluid flows into the honeycomb structure through the cells having unplugged open frontal areas in the one end surface of the structure, passes through the porous partition walls having a filter ability and enters the other through pores having unplugged open frontal areas in the other end surface (the outlet-side end surface) of the structure. Then, when the fluid passes through the partition walls, the PM in the fluid is collected by the partition walls, and the fluid purified by removing the PM therefrom is discharged from the other end surface of the structure.

Moreover, the open area ratio of the inlet-side end surface of the structure is preferably larger than that of the outlet-side end surface thereof. When the open area ratio of the inlet-side end surface of the structure is increased, the thickness of a PM cake layer during the deposition of the PM decreases, and the pressure loss due to the deposited PM can be decreased.

[1-2] Segment Structure:

Furthermore, as another configuration of the present embodiment, a honeycomb structure include a plurality of segments having a honeycomb shape and each including a plurality of cells as the through channels of a fluid which are partitioned by porous partition walls between the inlet-side end surface of the structure as the inlet side of the fluid and the outlet-side end surface of the structure as the outlet side of the fluid. The plurality of segments are preferably assembled in a direction vertical to the axial direction of the cells and integrally joined. That is, the honeycomb structure preferably has a constitution in which the plurality of segments (honeycomb segments) having the honeycomb shape are assembled and integrally joined. In a case where the honeycomb structure is constituted of the honeycomb segments, a region provided with modifying portions and a region which is not provided with any modifying portion are easily disposed in the honeycomb structure, respectively. That is, when the honeycomb structure is used in a DPF or the like, the flow rate of the fluid is not uniform in the inlet-side end surface or outlet-side end surface of the honeycomb structure, and varies in the center region or outer peripheral region of the structure in the diametric direction thereof. Moreover, even a temperature rise during regeneration is not uniform in the inlet-side end surface or outlet-side end surface of the honeycomb structure, and varies in the center region or outer peripheral region of the structure in the diametric direction thereof. In such a case, the honeycomb structure is preferably regulated by, for example, providing the region provided with the modifying portions and the region which is not provided with any modifying portion, or making a difference in the pore diameters of the modifying portions.

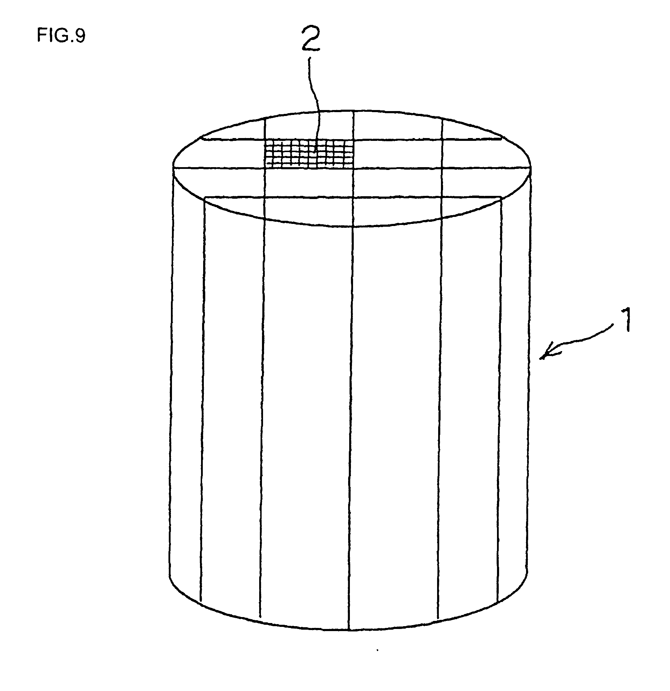

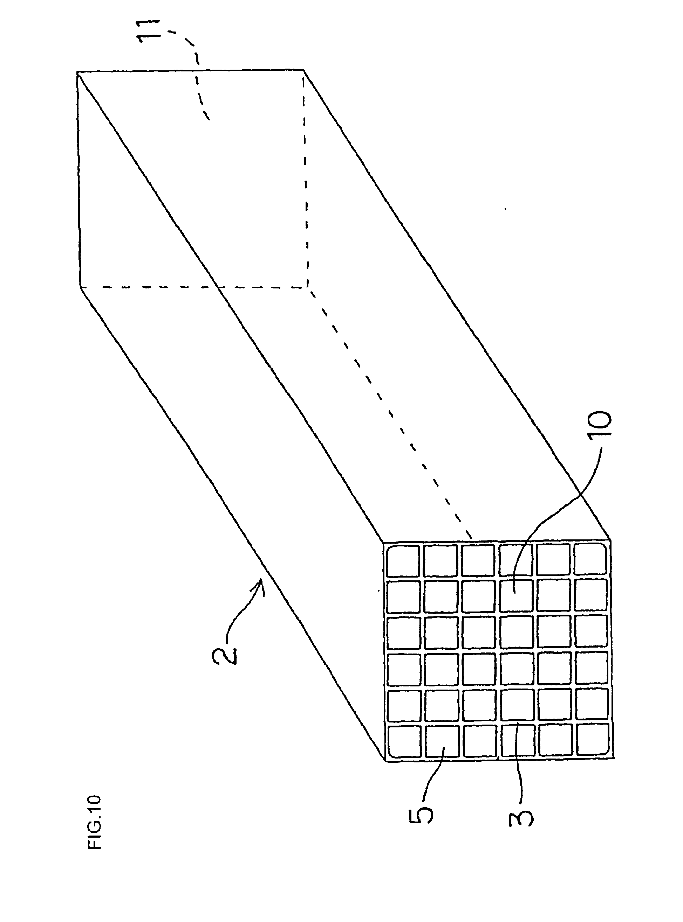

Specifically, as shown in Figs. 9, 10, a plurality of segments having a honeycomb shape (honeycomb segments) are assembled and integrally joined. As shown in Fig. 10, a honeycomb segment 2 has an inlet-side end surface 10 on the inlet side of a fluid and an outlet-side end surface 11 on the outlet side of the fluid, and a plurality of cells (through holes) 5 as through channels of the fluid are partitioned by porous partition walls 3 between these two end surfaces. It is to be noted that Fig. 9 is a schematic perspective view schematically showing one example of a basic constitution of the honeycomb structure (having a segment structure) according to another configuration of the present embodiment, and Fig. 10 is a schematic perspective view schematically showing one example of the honeycomb segment in the basic constitution of the honeycomb structure (having the segment structure) according to the other configuration of the present embodiment.

Moreover, in the honeycomb structure according to the other configuration of the present embodiment, the lengths, porosities and average pore diameters of modifying portions may be equal in all the honeycomb segments constituting the honeycomb structure. Alternatively, in the above desired ranges, outer peripheral segments positioned in the outer peripheral portion of the honeycomb structure may be different from center segments positioned on the inner side of the outer peripheral segments in at least one of the porosity, average pore diameter and length of the modifying portion among the segments constituting the honeycomb structure.

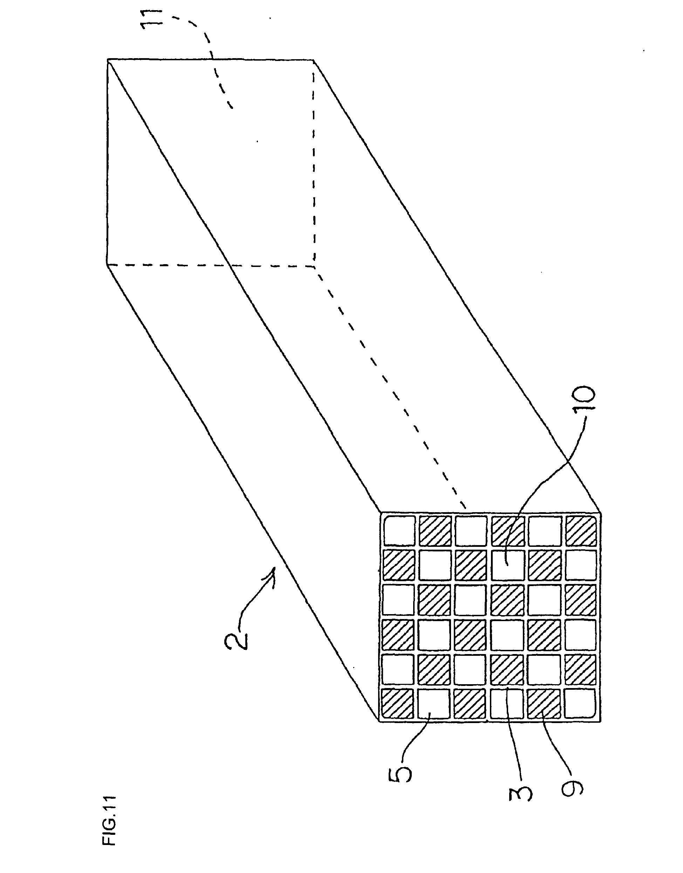

It is to be noted that in a case where the honeycomb structure is used as a filter such as the DPF, the structure is usually provided with plugging portions which plug open frontal areas of predetermined cells in the inlet-side end surface of the structure and which plug open frontal areas of the remaining cells in the outlet-side end surface of the structure. As shown in Fig. 11, the structure is usually plugged so that plugging portions 9 form a checkered pattern in one end surface of the structure and so that the plugging portions form a complementary checkered pattern in the other end surface of the structure. That is, the plugging portions are formed so as to plug the open frontal areas of the adjacent cells in opposite end surfaces of the structure.

In a case where a fluid including a PM such as soot is passed from the one end surface (the inlet-side end surface) of the honeycomb structure constituted of the honeycomb segments provided with the plugging portions in this manner, the fluid flows into the honeycomb structure through the cells having unplugged open frontal areas in the one end surface of the structure, passes through the porous partition walls having a filter ability and enters the other through pores having unplugged open frontal areas in the other end surface (the outlet-side end surface) of the structure. Then, when the fluid passes through the partition walls, the PM in the fluid is collected by the partition walls, and the fluid purified by removing the PM therefrom is discharged from the other end surface of the structure.

Moreover, to integrally join a honeycomb structure (having a segment structure) according to another configuration of the present embodiment, a plurality of honeycomb segments 2 shown in Fig. 11 may be assembled and integrally joined in a direction vertical to the axial direction of cells. Here, a joining material is used for joining the honeycomb segments 2, and preferable examples of this joining material include a material made of main components such as a ceramic fiber having a heat resistance, a filler made of ceramic particles and an inorganic adhesive such as colloidal silica. Furthermore, if necessary, an organic binder (e.g., methyl cellulose (MC), carboxymethyl cellulose (CMC) or the like), a dispersant, water and the like are added to the material, and this material is mixed and kneaded by using a kneader such as a mixer to form a pasted material.

The joining face of each honeycomb segment is coated with such a joining material in a predetermined thickness, and the honeycomb segments are assembled. Afterward, the joining material is dried and hardened, and the honeycomb structure is formed in which the plurality of honeycomb segments are integrated. Subsequently, if necessary, the outer peripheral portion of the honeycomb structure is ground, whereby the honeycomb structure may be processed into a desired shape such as a columnar shape. It is to be noted that in this case, the structure is processed so as to remove an outer peripheral wall thereof, and inner partition walls and cells are exposed. Therefore, the exposed surface of the structure is preferably covered with a coating material or the like so as to reform the outer peripheral wall thereof.

[1-2-1] Constituent Material of Base Material:

From the viewpoints of the strength, heat resistance and the like, preferable examples of the constituent material of the base material of the honeycomb structure or each honeycomb segment of the present embodiment include at least one material selected from the group consisting of silicon carbide (SiC), a silicon-silicon carbide based composite material formed by using silicon carbide (SiC) as an aggregate and silicon (Si) as a combining material, silicon nitride, cordierite, mullite, alumina, spinel, a silicon carbide-cordierite based composite material, lithium aluminum silicate, aluminum titanate and an Fe-Cr-Al based metal. Above all, as the constituent material of the base material of the honeycomb segments used in the honeycomb structure of the present embodiment, silicon carbide or the silicon-silicon carbide based composite material is preferably used. As the constituent material of the base material used in the honeycomb structure which is not constituted of the honeycomb segments, cordierite is preferably used. As the constituent material of the plugging portions, the same material as that of the honeycomb structure or the honeycomb segments is preferably used so as to decrease a thermal expansion difference between the plugging portions and the honeycomb structure or the honeycomb segments.

[1-2-2] Base Material:

There is not any special restriction on a manufacturing method of the base material, and a heretofore known method may be used. As one example of a specific method, a binder such as methyl cellulose, hydroxypropoxyl cellulose, hydroxyethyl cellulose, carboxymethyl cellulose or polyvinyl alcohol, a pore former, a surfactant, water as a solvent and the like are added to the above material to form a clay having plasticity, and this clay is extruded into a predetermined honeycomb shape, followed by drying with microwaves, hot air or the like and firing. When the cells are provided with the plugging portions, the firing may be performed before forming the plugging portions in the cells, or may be performed together with the firing of the plugging portions after forming the plugging portions in the cells.

The porosity or average pore diameter of the base material can be adjusted in accordance with the particle diameters of the material, the particle diameters of the pore former, the amount of the pore former to be added, firing conditions and the like.

[1-3] Cell:

Moreover, there is not any special restriction on a plugging method of the cells, and a heretofore known method may be used. As one example of a specific method, a sheet is attached to the end surface of each honeycomb segment or the honeycomb structure, and holes are made in positions of the sheet corresponding to the cells to be plugged. While this sheet is attached, the end surface of the honeycomb segment or the honeycomb structure is immersed into a plugging slurry made of the slurried constituent material of the plugging portions, and the plugging slurry is charged into the open frontal ends of the cells to be plugged through the holes made in the sheet, followed by drying and/or firing to harden the slurry.

In the honeycomb structure used in the DPF, all the cells have the same shape (usually a square) and an equal open area, and the cells are alternately plugged so as to form the checkered patterns in the inlet-side end surface and outlet-side end surface of the structure. Moreover, the inlet-side end surface of the structure usually has an open area ratio equal to that of the outlet-side end surface thereof. However, in recent years, a honeycomb structure has been suggested in which for a purpose of suppressing the increase of the pressure loss after the collection of the soot or the like, the open area ratio of the inlet-side end surface of the structure is larger than that of the outlet-side end surface thereof. Such a structure may be applied to the honeycomb structure of the present embodiment.

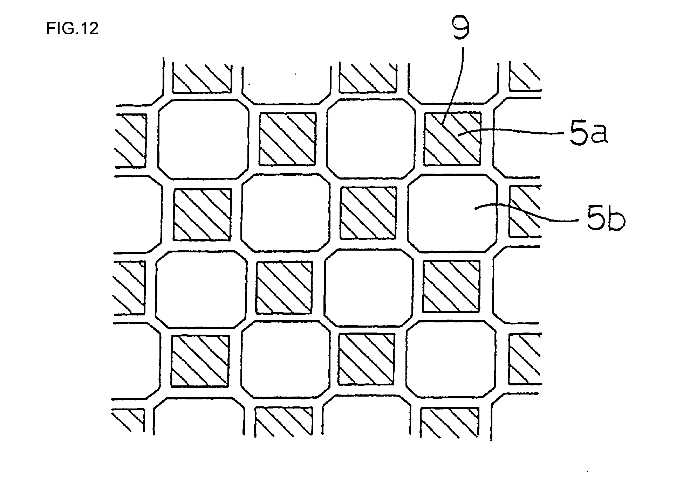

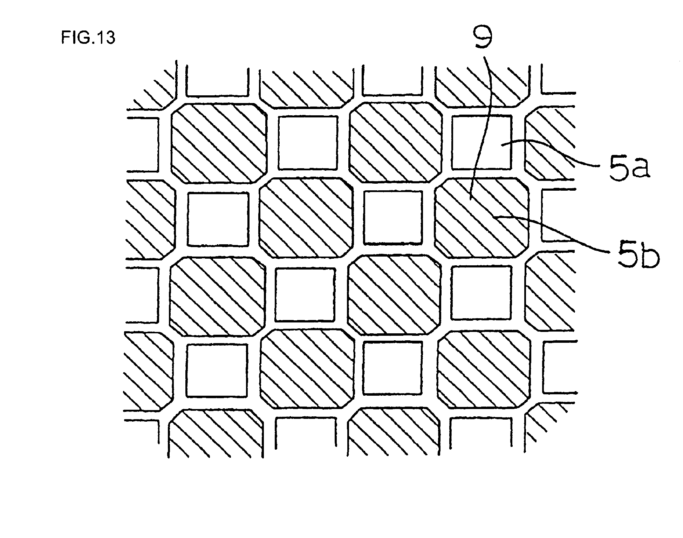

Moreover, as shown in Figs. 12 and 13, a plugged honeycomb structure having an open area ratio in the inlet-side end surface thereof which is different from that in the outlet-side end surface thereof is preferably formed by providing square cells 5a and octagonal cells 5b having open areas larger than those of the square cells; alternately arranging the cells in two directions crossing each other at right angles in the respective end surfaces of the structure; plugging the square cells 5a with the plugging portions 9 in the inlet-side end surface of the structure; and plugging the octagonal cells 5b with the plugging portions 9 in the outlet-side end surface thereof. Thus, the octagonal cells 5b having large open areas are opened in the inlet-side end surface of the structure, and the square cells 5a having small open areas are opened in the outlet-side end surface thereof, whereby the open area ratio of the inlet-side end surface thereof can be larger than that of the outlet-side end surface thereof. It is to be noted that Fig. 12 is an enlarged diagram schematically showing a part of the inlet-side end surface of the structure, and Fig. 13 is an enlarged diagram schematically showing a part of the outlet-side end surface of the structure.

[1-4] Forming Method of Modifying Portions:

Furthermore, the modifying portions can be formed by, for example, a method of preparing a modifying slurry including particles having an average particle diameter smaller than the average pore diameter of the base material; immersing the one end surface of the base material into this slurry so as to immerse a portion of the material having a predetermined length to be provided with the modifying portions; and infiltrating the slurry, that is, charging particles included in the slurry into the pores of the partition walls of the base material, followed by a heat treatment. In particular, the particles in the slurry are charged into the pores of the partition walls, and the pores which make no or little contribution to the flow can selectively be modified with the unnecessary slurry by causing air to flow into the partition walls by air blowing or the like, because the particles in the slurry charged in pores which noticeably contribute to the flow are preferentially discharged. Furthermore, in the honeycomb structure constituted of segments in another configuration of the present embodiment, the modifying portions may be formed before the segments are joined, or may be formed in the honeycomb structure after the segments are joined. When the modifying portions are formed before joining the segments, the regions provided with the modifying portions, and the porosities and average pore diameters of the modifying portions can freely be combined in the center segments and outer peripheral segments of the structure. However, even in a case where the modifying portions are formed in the honeycomb structure, when masking and a plurality of modifying processes are performed, the regions provided with the modifying portions, and the porosities and average pore diameters of the modifying portions can freely be set. Therefore, the forming of the modifying portions is not limited by the state of the honeycomb structure.

The modifying slurry includes a component which finally remains in the partition walls and which chemically or physically changes as long as the component is not removed. The modifying slurry preferably includes, as densifying particles, a ceramic material selected from the group consisting of silicon carbide, silicon nitride, cordierite, alumina, mullite, zirconia, zirconium phosphate, aluminum titanate, titania and a combination of them, an Fe-Cr-Al based metal, a nickel-based metal, inorganic powder of metal Si and SiC and the like. Furthermore, particles included in a wash-coat material for loading a catalyst component in the honeycomb structure may be used. For example, y alumina, ceria, zirconia, ceria-based composite oxide, zirconia based composite oxide or the like may be used.

In addition to such particles, the modifying slurry includes a combining material capable of combining the particles in the pores, and these materials are preferably diluted with water. Furthermore, a dispersant, a defoaming agent or the like may appropriately be included. As the combining material, colloidal sol such as silica sol or alumina sol, a layered compound swelling and indicating combining properties or the like is preferably usable. The conditions of the heat treatment after the infiltrating the modifying slurry may appropriately be determined by the composition of the modifying slurry. When the pores are modified with the modifying slurry having the same composition as that of the base material, the heat treatment on the same conditions as the firing conditions of the base material is required for imparting the combining properties. In a case where a material such as colloidal silica which develops strength at 700 to 800°C is combined, the heat treatment at a low temperature can be performed.

It is to be noted that the decrease of the porosity of the modifying portion with respect to the porosity of the base material or the decrease of the average pore diameter of the modifying portion with respect to the average pore diameter of the base material can be adjusted in accordance with the particle diameters of the particles included in the modifying slurry, the content of the particles, the number of the times of the infiltrating of the modifying slurry and the like.

Moreover, the thicknesses of the partition walls of the honeycomb structure or the honeycomb segments of the present embodiment are preferably 7 to 20 mil (178 to 508 $\mu$m), more preferably 8 to 16 mil (203 to 406 $\mu$m), further preferably 10 to 12 mil (254 to 305 $\mu$m). When the thicknesses of the partition walls are less than 7 mil, the strength runs short, and the resistance to thermal shock lowers on occasion. On the other hand, when the thicknesses of the partition walls exceed 20 mil, the pressure loss tends to increase.

Furthermore, the cell density is preferably 140 to 350 cells/in$^2$ (cpsi), more preferably 160 to 320 cpsi, and further preferably 200 to 300 cpsi. When the cell density is less than 140 cpsi, the contact efficiency with the fluid tends to run short. On the other hand, when the cell density exceeds 350 cpsi, the pressure loss tends to increase. It is to be noted that "cpsi" is the abbreviation of "cells per square inch", and is a unit indicating the number of the cells per square inch. For example, 10 cpsi is about 1.55 cells/cm$^2$.

Additionally, there is not any special restriction on a cell shape (the shape of each cell section). Examples of the shape include a polygonal shape such as a square, triangular, hexagonal or octagonal shape, and a circular shape, or cells having different shapes as described above may be combined and arranged.

[1-5] Catalyst Loading Filter:

Furthermore, in the honeycomb structure of the present embodiment, the catalyst component is preferably loaded in the partition walls. When the catalyst is loaded in this manner, PM burning can be promoted, or harmful substances in the exhaust gas can be removed during the regeneration of the filter. Examples of a method for loading the catalyst component in the partition walls include a method in which powder made of a thermally resistant inorganic oxide having a large specific surface area, for example, alumina powder is infiltrated into a solution including a catalyst component, dried and then fired to obtain the powder containing the catalyst component. Alumina sol, water and the like is added to this powder to prepare the catalyst slurry, and each honeycomb segment or the honeycomb structure is immersed into and coated with this slurry, followed by drying and firing. However, there is not any special restriction on the method for loading the catalyst, and the catalyst may be loaded in the honeycomb structure of the present embodiment by use of a known catalyst loading method.

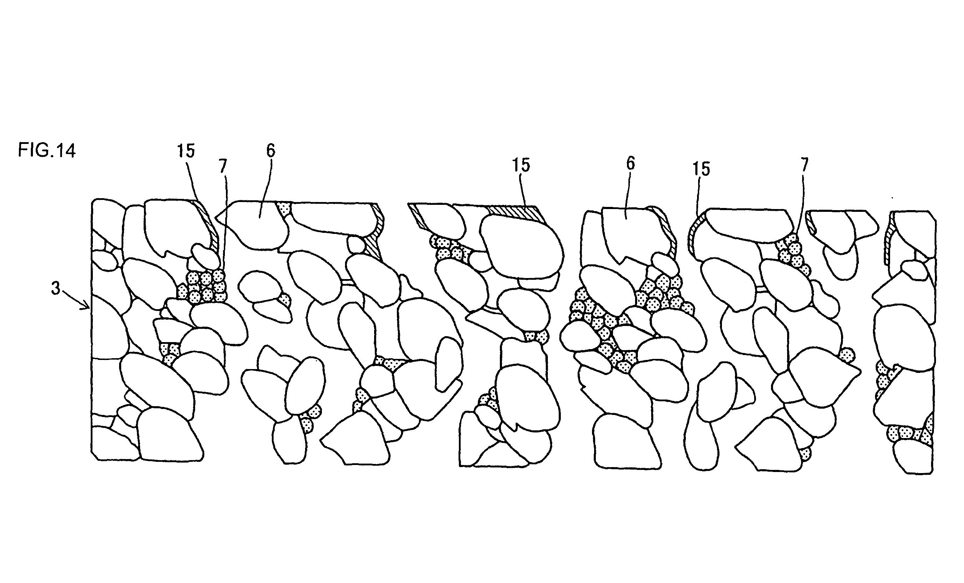

Specifically, as shown in Fig. 14, for example, a catalyst 15 is loaded in pores of a partition wall 3.

Moreover, as a catalyst component to be loaded, it is preferable to use one or more noble metals selected from the group consisting of Pt, Rh and Pd. The amount of the noble metals to be loaded is preferably 0.3 to 3.5 g/L per unit volume of the honeycomb structure.

Furthermore, the total amount of the catalyst to be loaded after forming the modifying portions can preferably be decreased with respect to the amount before forming the modifying portions. When the modifying portions are formed, the heat capacity can be increased. Additionally, the pores which make no or little contribution to the flow, for example, non-communication pores decrease. Therefore, the total area of pore wall surfaces decreases, and an unnecessary catalyst does not have to be loaded. That is, heretofore, the catalyst has been loaded even in the pores which make no or little contribution to the flow. However, when the modifying portions are formed, the amount of the catalyst to be loaded can be controlled, and the catalyst loading filter having a large heat capacity while keeping the partition wall pressure loss can be realized. In addition, a product cost can be saved.

[Examples]

The present invention will specifically be described with respect to examples, but the present invention is not limited to these examples. It is to be noted that "parts" and "%" in the following examples and comparative examples are parts by mass and mass% unless otherwise specified. Moreover, various types of evaluation and measurement in the examples are performed by the following method.

(Examples 1 to 11 and Comparative Example 1)

SiC powder and metal Si powder were mixed at a mass ratio of 80:20, and a pore former, an organic binder, a surfactant and water were added to the mixture to obtain a clay having plasticity. This clay was extruded and dried to obtain a formed honeycomb-like article. This formed honeycomb-like article was provided with plugging portions in one end of each of cells so that both end surfaces of the article had a checkered pattern. That is, the plugging portions were formed so that the adjacent cells are plugged in opposite end surfaces of the article. As a material of the plugging portions, the same material as that of the formed honeycomb-like article was used. Thus, the plugging portions were formed, followed by drying. Afterward, the formed honeycomb-like article was degreased in the atmosphere at about 400°C, and further fired in an Ar atmosphere at about 1450°C, and SiC particles in the formed article were combined by Si. In consequence, there was obtained a base material of a square post-like honeycomb segment having porosity and average pore diameter as shown in Table 1, a partition wall thickness of 12 mil (305 $\mu$m), square cells, a cell density of about 46.5 cells/cm$^2$ (300 cells/square inch), a square section with one side of 35 mm and a length of 152 mm in an axial direction. It is to be noted that the measurement method of the porosity and average pore diameter has been described above.

Next, 10 parts by mass of colloidal silica (a solution having a solid content of 40%) having an average particle diameter of 0.6 $\mu$m and 400 parts by mass of water were added to 150 parts by mass of SiC particles having an average particle diameter of 1 $\mu$m, and well stirred to prepare a modifying slurry. It is to be noted that during the preparation, a dispersant and a defoaming agent were appropriately added. A portion of the base material having a predetermined length from one end surface thereof was immersed into the modifying slurry obtained in this manner, and an unnecessary slurry was removed by air blowing. Next, the slurry was dried, and a heat treatment was performed at 700°C, to form modifying portions having the porosity and average pore diameter shown in Table 1 and values of (1) the decrease (the porosity decrease) of the porosity of the modifying portions with respect to the porosity of the base material and (2) the decrease (the average pore diameter decrease) of the average pore diameter of the modifying portions with respect to the average pore diameter of the base material as shown in the table, thereby preparing a honeycomb segment. It is to be noted that each sample of the example was adjusted in accordance with the pressure of air blowing for removing an unnecessary slurry. For example, an air blow pressure was set to 1 MPa in Example 1, 0.4 MPa in Example 5 and 0.13 MPa in Example 10, whereby a predetermined porosity decrease was obtained.

Subsequently, water was further added to a mixture of SiC powder, aluminosilicate fiber, aqueous silica sol solution and clay, and kneaded for 30 minutes by use of a mixer, to obtain a pasted joining material. A step of coating the outer peripheral surface of the honeycomb segment with this joining material in a thickness of about 1 mm to form a joining material layer and disposing another honeycomb segment on the joining material layer was repeated, to prepare a laminated honeycomb segment article including 16 honeycomb segments in total as a combination of 4 × 4 honeycomb segments. Then, an external pressure was appropriately applied to the article to join the whole article, followed by drying at 120°C for two hours, thereby obtaining a joined honeycomb segment article. The outer periphery of the joined honeycomb segment article was ground so that the outer shape of the article was columnar, and the processed surface of the article was coated with a coating material having the same composition as that of the joining material, to reform the outer peripheral wall of the article, followed by drying and hardening at 700°C for two hours. In consequence, honeycomb structures of Examples 1 to 11 and Comparative Example 1 having properties shown in Table 1 were obtained.

As to the honeycomb structures of Examples 1 to 11 and Comparative Example 1 prepared in this manner, a partition wall permeation pressure loss increase ratio was obtained by the following method. First, one 30 mm × 30 mm partition wall was cut out from each honeycomb structure (the modified honeycomb structure) of Examples 1 to 6 provided with the modifying portions, and air which did not include any soot was caused to flow through the partition walls at a flow speed of 0.1 m/s in a room set to 25°C. Then, pressure losses before and after the partition walls were measured as the partition wall permeation pressure losses. Moreover, honeycomb structures which were not provided with any modifying portion (the unmodified honeycomb structures) were prepared by a procedure similar to the preparation procedure of the honeycomb structures of the examples and comparative examples, except that a base material was not provided with any modifying portion. As to these unmodified honeycomb structures, pressure losses were measured by a similar measurement method, and obtained as the partition wall permeation pressure loss of the unmodified honeycomb structure. From each pressure loss measured in this manner, the pressure loss increase ratio was obtained by the following equation. The result is shown in Table 1.

$$\text{The pressure loss increase ratio (\%)} = (\text{the pressure loss of the modified honeycomb structure/the pressure loss of the unmodified honeycomb structure} - 1) \times 100$$

Moreover, the decrease ratio of the permeability of the modifying portion with respect to the permeability of the base material was calculated from the measurement result of the partition wall permeation pressure loss by use of Darcy equation to obtain values shown in Table 1. The decrease ratio was calculated from the calculated permeability by the following equation. The result is shown as a permeability decrease ratio in Table 1.

$$\text{The decrease ratio (\%) of the permeability} = (1 - \text{the permeability of the modified honeycomb structure/the permeability of the unmodified honeycomb structure}) \times 100$$

[Table 1]

| | Porosity (%) | Average pore diameter (µm) | Porosity decrease (%) | Porosity decrease ratio (%) | Average pore diameter decrease (µm) | Average pore diameter decrease ratio (%) | Partition wall permeation pressure loss increase ratio (%) | Permeabilit decrease ratio (%) | Maximum temperature lowering amount (°C) |
|---|---|---|---|---|---|---|---|---|---|
| Base material | 62.6 | 13.0 | 0.0 | 0.0 | 0.0 | 0.0 | 0 | 0.00 | 0 |
| Example 1 | 61.8 | 13.1 | 0.8 | 1.3 | -0.1 | -0.4 | 0 | 0.29 | 10 |
| Example 2 | 60.4 | 13.1 | 2.2 | 3.5 | -0.1 | -0.4 | 1 | 0.93 | 30 |
| Example 3 | 57.9 | 13.1 | 4.7 | 7.5 | -0.1 | -0.8 | 3 | 2.30 | 60 |
| Example 4 | 57.4 | 13.1 | 5.2 | 8.3 | -0.1 | -0.8 | 3 | 2.80 | 70 |
| Example 5 | 56.4 | 13.1 | 6.2 | 10.0 | -0.1 | -0.4 | 5 | 3.70 | 80 |
| Example 6 | 51.3 | 13.1 | 11.3 | 18.0 | -0.1 | -0.5 | 12 | 9.00 | 150 |
| Example 7 | 50.6 | 13.1 | 12.0 | 19.2 | -0.1 | -0.8 | 13 | 10.50 | 160 |
| Example 8 | 50.2 | 13.1 | 12.4 | 19.8 | -0.1 | -0.8 | 15 | 11.10 | 170 |
| Example 9 | 49.7 | 13.1 | 12.9 | 20.6 | -0.1 | -0.8 | 17 | 12.60 | 180 |
| Example 10 | 47.9 | 13.1 | 14.7 | 23.5 | -0.1 | -0.5 | 18 | 13.82 | 190 |
| Example 11 | 44.6 | 13.1 | 18.0 | 28.7 | -0.1 | -0.5 | 25 | 19.34 | 230 |
| Comparative Example 1 | 51.9 | 13.0 | 10.7 | 17.1 | 0.0 | 0.0 | 30 | 22.83 | 140 |

As shown in Table 1, Examples 1 to 11 which satisfy the requirements of the present invention indicate a small partition wall permeation pressure loss increase ratio, and it is seen that even when these examples are provided with the densified modifying portions for suppressing the temperature rise during the filter regeneration, the excessive rise of the pressure loss does not easily occur. Moreover, it can be considered that the permeability decrease ratio is minimized and that the only pores that make no or little contribution to the flow are modified. Therefore, the soot deposited in the pores which make no or little contribution to the flow and remained to be burnt during the regeneration is not deposited, and hence the regeneration efficiency can be improved. Furthermore, when this honeycomb structure is used as the catalyst loading filter loaded with the catalyst, a catalyst coat amount is preferably small.

On the other hand, Comparative Example 1 has poor pressure loss properties with respect to the example having a large partition wall permeation pressure loss increase ratio and an equal heat capacity. Moreover, it has been seen that the permeability decrease ratio is large and that there are a large number of pores which make no or little contribution to the flow. It has been proved that the regeneration efficiency is easily decreased.

The present invention can preferably be used as a dust collecting filter such as a DPF.

## Claims

1. A honeycomb structure having a honeycomb shape and comprising a plurality of cells as through channels of a fluid which are partitioned by porous partition walls between the inlet-side end surface of the structure as the inlet side of the fluid and the outlet-side end surface of the structure as the outlet side of the fluid,
   wherein the partition walls have a porous base material made of ceramic particles, and modifying portions formed by impregnating all or a part of the base material with a slurry including particles having an average particle diameter smaller than the average pore diameter of the base material, followed by a heat treatment.

2. The honeycomb structure according to claim 1, wherein the modifying portions modify non-communication pores formed in the base material.

3. The honeycomb structure according to claim 1, wherein the modifying portions modify the pores in the partition walls having a partition wall permeation average flow speed which is less than 30% of that of the base material.

4. The honeycomb structure according to any one of claims 1 to 3, whose porosity decreases as much as 8 to 20% after the modifying portions are provided as compared with before the modifying portions are provided.

5. The honeycomb structure according to any one of claims 1 to 4, whose decrease ratio of the average pore diameter is less than 1% after the modifying portions are formed as compared with before the modifying portions are formed.

6. The honeycomb structure according to any one of claims 1 to 5, wherein a permeation pressure loss generated during the permeation of the fluid through the partition walls is 15% or more smaller than in a honeycomb structure made of a material having an equal porosity and an equal average pore diameter.

7. The honeycomb structure according to any one of claims 1 to 6, wherein a pressure loss due to deposited soot generated by the soot deposited on the partition walls during the permeation of the fluid through the partition walls is 5% or more smaller than in a honeycomb structure made of a material having an equal porosity and an equal average pore diameter.

8. The honeycomb structure according to any one of claims 1 to 7, whose open area ratio of the inlet-side end surface thereof is larger than that of the outlet-side end surface thereof.

9. The honeycomb structure according to any one of claims 1 to 8, wherein a catalyst component is loaded on the partition walls.

10. The honeycomb structure according to claim 9, wherein the total loading amount of the catalyst after forming the modifying portions is decreased as compared with before forming the modifying portions.

11. A method of making a honeycomb structure according to any one of claims 1 to 10 comprising forming the modifying portions by impregnating all or a part of the base material with a slurry including particles having an average particle diameter smaller than the average pore diameter of the base material, followed by a heat treatment.

FIG.1

FIG.2

FIG.3

FIG.4

FIG.5

FIG.6

FIG.7

FIG.8

EP 2 174 698 A1

FIG.9

FIG.10

EP 2 174 698 A1

FIG.11

EP 2 174 698 A1

FIG.12

FIG.13

FIG.14

FIG.15

AFTER MODIFYING

HEAT
CAPACITY

BEFORE MODIFYING

PERMEABILITY

Europäisches
Patentamt

European
Patent Office

Office européen
des brevets

# EUROPEAN SEARCH REPORT

Application Number

EP 09 25 2378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 108 448 A (NGK INSULATORS LTD [JP]) 14 October 2009 (2009-10-14) * paragraphs [0091], [0092], [0142] * ----- | 1,11 | INV. B01D46/24 |
| P,X | EP 1 982 767 A (NGK INSULATORS LTD [JP]) 22 October 2008 (2008-10-22) * paragraphs [0072] - [0076] * ----- | 1,11 | |
| P,X | EP 2 103 337 A (NGK INSULATORS LTD [JP]) 23 September 2009 (2009-09-23) * paragraph [0119]; claims 1,4 * ----- | 1,11 | |
| A | US 2007/054803 A1 (MIYAIRI YUKIO [JP]) 8 March 2007 (2007-03-08) * claim 1; figure 2 * ----- | 1-11 | |
| A | US 4 632 683 A (FUKUTANI MASANORI [JP] ET AL) 30 December 1986 (1986-12-30) * claims 1-3 * ----- | 1-11 | |

TECHNICAL FIELDS
SEARCHED        (IPC)

B01D

The present search report has been drawn up for all claims

| Place of search | Date of completion of the search | Examiner |
|---|---|---|
| Munich | 8 February 2010 | Tiercet, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 25 2378

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2010

| Patent document cited in search report | | Publication date | Patent family member(s) | | Publication date |
|---|---|---|---|---|---|
| EP 2108448 | A | 14-10-2009 | JP | 2009233582 A | 15-10-2009 |
| EP 1982767 | A | 22-10-2008 | WO | 2007091688 A1 | 16-08-2007 |
| | | | KR | 20080102179 A | 24-11-2008 |
| | | | US | 2009022942 A1 | 22-01-2009 |
| EP 2103337 | A | 23-09-2009 | JP | 2009255048 A | 05-11-2009 |
| US 2007054803 | A1 | 08-03-2007 | EP | 1920840 A1 | 14-05-2008 |
| | | | WO | 2007026805 A1 | 08-03-2007 |
| US 4632683 | A | 30-12-1986 | DE | 3541372 A1 | 05-06-1986 |
| | | | JP | 1753935 C | 23-04-1993 |
| | | | JP | 3010365 B | 13-02-1991 |
| | | | JP | 61129015 A | 17-06-1986 |

EPO FORM P0459

For more details about this annex : see Official Journal of the European Patent Office, No. 12/82

**REFERENCES CITED IN THE DESCRIPTION**

**Patent documents cited in the description**

- JP 2000279729 A
- JP 1145378 A

- WO 200878799 A